# EUROPÄISCHE PATENTSCHRIFT

(11) **EP 1 596 540 B1**
(45) Veröffentlichungstag und Bekanntmachung des Hinweises auf die Patenterteilung: **30.11.2011**
(21) Anmeldenummer: 05007565.4
(22) Anmeldetag: 06.04.2005
(51) Int. Cl.: H04W 84/18, H04L 12/56, H04W 48/16, H04W 84/20, H04W 8/26

(54) **Verfahren zum Aufbau eines Ad-Hoc-Netzwerkes und entsprechendes Computerprogrammprodukt**
Method for setting up an ad hoc network and corresponding computer program product
Procédé pour l'établissement d'un réseau adhoc et produit de programme informatique correspondant

(30) Priorität: 11.05.2004 DE 102004023298
(43) Veröffentlichungstag der Anmeldung: 16.11.2005
(73) Patentinhaber: Fujitsu Technology Solutions Intellectual Property GmbH, 80807 München (DE)
(72) Erfinder: Filimon, Diana, 86368 Gersthofen (DE); Heiss, Stefan, 86399 Bobingen (DE)
(74) Vertreter: Epping - Hermann - Fischer

(56) Entgegenhaltungen:
- EP-A1- 1 315 334
- EP-A2- 1 309 128
- WO-A1-2007/094183
- DE-U1- 20 315 165
- US-A1- 2003 092 395
- R. Bruno, M. Conti, E. Gregori: "WLAN technologies for Mobile ad hoc Networks" Proceedings of the 34th Hawaii International Conference on System Sciences - 2001 3. Januar 2001 (2001-01-03), Seiten 1-11, XP002583592 Gefunden im Internet: URL:http://ieeexplore.ieee.org/stamp/stamp .jsp?tp=&arnumber=927196> [gefunden am 2010-05-21]

## Beschreibung

Die Erfindung betrifft ein Verfahren zum Aufbau eines Ad-Hoc-Netzwerkes zwischen mehreren Teilnehmern mit den Schritten: Bereitstellen einer Kabellosen Schnittstelle für die Teilnehmer und Aufbau einer Netzwerkzelle durch einen den Aufbau anstoßenden Teilnehmer, welcher einen Sonderstatus besitzt und einen Zellennamen der Netzwerkzelle vergibt.

Ein Ad-Hoc-Netzwerk ist eine Menge von kabellosen Mobilknoten, die ein temporäres Netzwerk ohne vorhandene Netzwerk-Infrastruktur bilden und keine zentrale Verwaltung besitzen. Dabei müssen die beteiligten Rechner alle anfallenden Infrastrukturaufgaben übernehmen. Anwendungsgebiete für Ad-Hoc-Netzwerke finden sich vor allem bei Besprechungen, bei denen die Besprechungsteilnehmer Notebooks, Pocket-Computer oder mobile Datenbankgeräte benutzen. Dabei soll die Möglichkeit geschaffen werden, Daten untereinander auszutauschen. Weitere Einsatzgebiete von Ad-hoc-Netzwerken sind Rettungseinsätze oder ein Heimnetzwerk.

Aus dem Stand der Technik sind Verfahren zum Aufbau von Ad-Hoc-Netzwerken bekannt, beispielhaft sei der Microsoft "Wireless Zero Configuration" Dienst genannt. Ferner sind Ad-hoc-Netzwerke sowie deren Aufbau und Einrichtung aus den Druckschriften EP 1 309 128 A2 sowie R. Bruno, M. Conti, E. Gregori: "WLAN technologies for Mobile ad hoc Networks" (Proceedings of the 34th Hawaii International Conference on System Sciences, 2001) bekannt. Darin werden Methoden zum Herstellen eines Ad-hoc-Netzwerks zwischen mehreren Geräten aufgezeigt.

Problematisch ist bei diesen Netzwerken, dass der Aufbau einer Netzwerkzelle mit mehreren Teilnehmern sehr umständlich ist und umfangreiche Kenntnisse über die Rechner-Hardware und über Netzwerktechnologien erfordert, so dass Ad-Hoc-Netzwerke in vielen Fällen aufgrund der Kompliziertheit des Aufbaus einer Netzwerkzelle nicht eingesetzt werden.

Bei dem Aufbau einer Netzwerkzelle wird den Teilnehmern ein Zellenname vorgegeben, wobei ein Teilnehmer, der dem Netzwerk beitreten möchte, diesen Zellennamen angeben muss. Da es sich bei Ad-Hoc-Netzwerken um kabellose Netzwerke handelt, besteht theoretisch die Möglichkeit, verschiedenen Netzwerken beizutreten, auch wenn sie in anderen Räumen oder anderen Gebäuden aufgebaut sind, ihre Reichweite sich aber bis zu dem betroffenen Benutzer erstreckt. Über den Zellennamen wird sichergestellt, dass man nur Teilnehmer an dem Netzwerk wird, an dem man teilnehmen möchte.

Nachdem sich also die potenziellen Netzwerkteilnehmer auf einen Zellennamen geeinigt haben, muss der Zellenaufbau von einem der Teilnehmer initiiert werden. Dieser verwendet dazu den zuvor festgelegten Zellennamen. Die anderen Netzwerkteilnehmer gliedern sich später in das Netzwerk ein. Problematisch ist der Fall, wenn mehrere Teilnehmer gleichzeitig versuchen, ein neues Ad-Hoc-Netzwerk mit dem gleichen Zellennamen einzurichten. Zwar wird mit größter Wahrscheinlichkeit der Fall nicht auftreten, dass zwei Teilnehmer exakt zum gleichen Zeitpunkt einen Netzwerkaufbau anstoßen, wegen der zeitlichen Spanne zwischen dem Anstoß eines Zellenaufbaus und der Verfügbarkeit der Netzwerkzelle kommt es jedoch zu dem Problem, dass zwei Teilnehmer einer Netzwerkzelle den Sonderstatus erhalten. Dann kann es zu einer Vermischung gesendeter Daten beider Teilnehmer mit Sonderstatus kommen, was im Ergebnis zu unbrauchbaren Daten beim Empfänger führt.

Aufgabe der Erfindung ist es, ein Verfahren zum Aufbau eines Ad-Hoc-Netzwerks anzugeben, bei dem ein eindeutiges Erkennen und eine Lösung des Konflikts im Falle der gleichzeitigen Erstellung gleich benannter Ad-Hoc-Netzwerkzellen ermöglicht sind.

Diese Aufgabe wird durch ein Verfahren der eingangs genannten Art gelöst, das dadurch gekennzeichnet ist, dass sichergestellt ist, dass in einer durch ihren zellennamen spezifizierten Netzwerkzelle nicht mehr als ein Teilnehmer einen Sonderstatus erhält, indem beim Anstoß des Zellenaufbaus durch den Teilnehmer mit Sonderstatus aus dem Zellennamen und einem teilnehmerspezifischen Parameter eine teilnehmerabhängige Kennung gebildet wird, über eine Abfrage der Netzwerkzelle durch andere Teilnehmer anhand der teilnehmerabhängigen Kennung der Netzwerkzelle festgestellt wird, ob mehrere Teilnehmer einen Zellenaufbau mit gleichem Zellennamen angestoßen haben und in allen Teilnehmern, die den Zellenaufbau mit gleichem Zellennamen angestoßen haben, Gegenmaßnahmen ergriffen werden.

Der Vorteil des erfindungsgemäßen Verfahrens besteht darin, dass aufgrund der teilnehmerabhängigen Kennung immer eindeutig feststellbar ist, ob unter einem Zellennamen verschiedene Teilnehmer einen Netzwerkaufbau versuchen.

Günstig ist dabei, wenn als Gegenmaßnahme nur einer der ermittelten Teilnehmer, die den Zellenaufbau mit gleichem Zellennamen angestoßen haben, den Sonderstatus behält und anschließend die teilnehmerabhängige Kennung des Teilnehmers mit Sonderstatus derart verkürzt wird, dass die Zelle unter dem Zellennamen, also ohne einen teilnehmerabhängigen Parameter betrieben wird. Das Weiterbetreiben unter dem Zellennamen ohne eine teilnehmerabhängige Kennung macht es für die anderen Teilnehmer einfach, der nun bestehenden Netzwerkzelle beizutreten, da dies ohne Kenntnis der unter Umständen sehr langen teilnehmerabhängigen Kennung erfolgen kann.

Eine vorteilhafte Strategie zur Konfliktlösung besteht darin, dass derjenige Teilnehmer, der als Erster versucht hat, die Netzwerkzelle unter dem gegebenen Zellennamen aufzubauen, den Sonderstatus erhält. Dazu kann ein Zeitstempel vorgesehen werden, durch den die zeitliche Reihenfolge der Versuche zum Aufbau der Netzwerkzelle bestimmbar ist.

Besonders günstig ist, wenn die teilnehmerabhängige Kennung aus einem ersten und einem zweiten Teil besteht, wobei der erste Teil der geplante Zellenname und der zweite Teil teilnehmerabhängig ist. Als teilnehmerspezifischer Parameter ist ein gerätespezifischer Code, z.B. eine so genannte MAC-Adresse, eine Prozessor-ID oder eine UUID günstig. Daneben kann in alternativen günstigen Ausgestaltungen des erfindungsgemäßen Verfahrens eine zufällige Zeichenfolge oder eine durch einen Benutzer eingegebene zeichenfolge verwendet werden.

Eine weitere vorteilhafte Möglichkeit der Konfliktlösung besteht darin, als Gegenmaßnahme den Zellenaufbau in allen Teilnehmern, die den Zellenaufbau mit gleichem Zellennamen angestoßen haben, abzubrechen.

Die Erfindung wird nachfolgend anhand eines Ausführungsbeispiels erläutert. Es zeigt:
Figur 1 eine Anordnung mehrerer Geräte, die ein kabelloses Ad-Hoc-Netzwerk bilden,
Figur 2 ein Ablaufdiagramm des erfindungsgemäßen Verfahrens,
Figur 3 eine detailliertere Darstellung von Teilschritten innerhalb des erfindungsgemäßen Verfahrens und
Figur 4 eine weitere detaillierte Darstellung von Teilschritten innerhalb des erfindungsgemäßen Verfahrens.

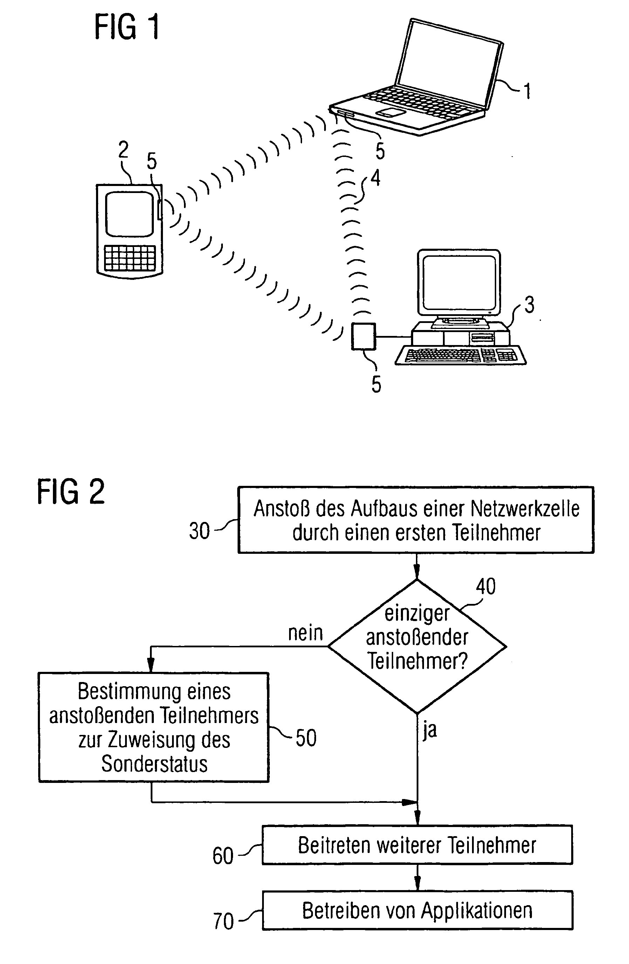

In der Figur 1 ist die Anordnung mehrerer Geräte dargestellt, die zu einem kabellosen Ad-Hoc-Netzwerk zusammengeschaltet sind. Ein Notebook-Computer 1, ein Pocket-Computer 2 und ein Desktop-Computer 3 besitzen jeweils eine Schnittstelle 5 zum Herstellen einer kabellosen Kommunikationsverbindung 4.

Wie eingangs beschrieben, muss sichergestellt werden, dass nicht mehrere Netzwerkzellen mit dem gleichen Zellennamen betrieben werden bzw. innerhalb einer Netzwerkzelle mit einem bestimmten Namen nicht mehrere Teilnehmer einen Sonderstatus erhalten, der nur demjenigen zusteht, der den Aufbau einer Netzwerkzelle angestoßen hat.

Der Aufbau einer Netzwerkzelle erfolgt gemäß der Darstellung von Figur 2. Der Aufbau einer Netzwerkzelle wird durch einen ersten Teilnehmer in einem Schritt 30 angestoßen. Dies erfolgt dadurch, dass der erste Teilnehmer einen Befehl an seinen Netzwerkadapter sendet, der eine neue Ad-Hoc Netzwerkzelle gründet. Dies wird auch als Setzen der SSID bezeichnet.

Durch das Senden dieses Befehls ist die Netzwerkzelle entstanden und besitzt zunächst einen Teilnehmer, nämlich den ersten Teilnehmer, der den Aufbau angestoßen hat. Potenzielle weitere Teilnehmer fragen in einem festen Intervall alle verfügbaren Netzwerkzellen mit Ihren Zellennamen ab die der Ihnen zugehörige Adapter in dem jeweiligen Augenblick erfasst. Ergibt sich eine Übereinstimmung mit dem zuvor festgelegten Zellennamen, bedeutet dies, dass mindestens ein anderer Teilnehmer, nämlich der mit dem Sonderstatus, schon in der Netzwerkzelle vorhanden ist. Anschließend hängt sich der neue Teilnehmer der Netzwerkzelle an, indem er den Netzwerkzellennamen seines Adapters, der schon vorher auf Ad-Hoc konfiguriert war, auf den gewünschten Namen setzt.

Die Netzwerkzelle ist darauf ausgelegt, dass es nur einen Teilnehmer mit einem Sonderstatus gibt. Wegen des zeitlichen Verzugs zwischen dem Anstoß des Aufbaus einer Netzwerkzelle und deren Verfügbarkeit kann der Fall auftreten, dass mehrere Teilnehmer sich als erste Teilnehmer begreifen und einen Befehl zum Aufbau einer Netzwerkzelle geben. Dies ist dann unproblematisch, wenn verschiedene Zellennamen gewählt werden. Wenn jedoch der gleiche Zellenname gewählt wird, so wird die Netzwerkzelle instabil, da nicht mehr klar ist, wer der Teilnehmer mit Sonderstatus ist, von dem Daten empfangen werden sollen. Der zweite Teilnehmer mit Sonderstatus ist auch der ersten Zellen angeschlossen, würde aber meinen, dass er darin der einzige Teilnehmer mit Sonderstatus ist.

In einem Verfahrensschritt 40 wird deswegen überprüft, ob es nur einen einzigen anstoßenden Teilnehmer gibt oder ob mehrere Teilnehmer einen Zellenaufbau angestoßen haben. Wenn es nur einen einzigen Teilnehmer gibt, so ist das Beitreten weiterer Teilnehmer in einem Verfahrensschritt 60 unproblematisch. Nachfolgend können in einem Schritt 70 Applikationen in dem Ad-Hoc-Netzwerk betrieben werden.

Wenn es mehrere anstoßende Teilnehmer gibt, werden in einem Schritt 50 Gegenmaßnahmen ergriffen. In dem gezeigten Ausführungsbeispiel wird einer der anstoßenden Teilnehmer bestimmt, um diesem einen Sonderstatus zu gewähren. Dies kann beispielsweise dadurch erfolgen, dass der Befehl zum Aufbau einer Netzwerkzelle mit einem Zeitstempel versehen wird und im Schritt 50 der Teilnehmer mit dem älteren Zeitstempel den Sonderstatus erhält. Eine Alternative zur Konfliktlösung im Schritt 50 besteht darin, den Teilnehmer mit einer höheren Nummer als denjenigen Teilnehmer auszuwählen, der den Sonderstatus erhält. Als weitere Alternativ könnte in Schritt 50 auch der Aufbau der Netzwerkzelle abgebrochen werden, so dass zur Bildung eines Ad-Hoc-Netzwerks ein neuer Anstoß erforderlich ist.

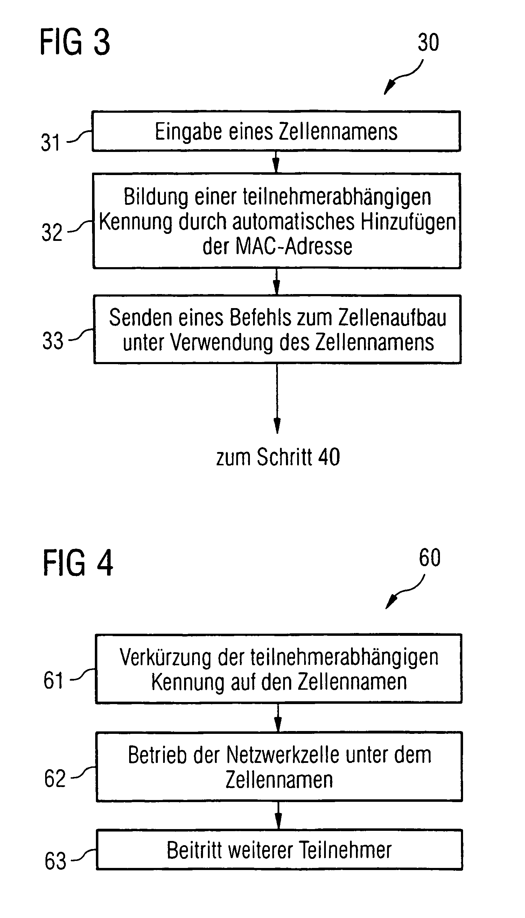

Eine Schwierigkeit besteht darin, wie im Schritt 40 erkannt werden kann, ob mehrere Teilnehmer einen Zellenaufbau angestoßen haben. Wie oben erläutert, ist zum Anstoß des Zellenaufbaus die Angabe eines Zellennamens erforderlich. Dies erfolgt gemäß Figur 3 in einem Schritt 31. Erfindungsgemäß ist vorgesehen, in einem Schritt 32 eine teilnehmerabhängige Kennung zu bilden, was beispielsweise durch das automatische Hinzufügen der MAC-Adresse des Netzwerk-Adapters des jeweiligen Teilnehmers erfolgt. Statt der vollständigen MAC-Adresse, bei der es sich weltweit um eine eindeutige Adresse handelt und die deswegen sehr lang ist, kann auch nur ein Teil der MAC-Adresse verwendet werden. Alternativ kann ein anderer gerätespezifischer Code verwendet werden, beispielsweise eine Prozessor-ID oder eine UUID, wobei letzteres für "Universally Unique Identifier" steht. Dieser ist 128bit lang und besteht aus einem 48-bit Manufacturing Code, einem 16-Bit Version/Variant Code und einem 64bit Device Identifier Code, der für jedes Gerät nicht veränderbar und immer unterschiedlich ist. UUID gibt es bei derzeit vor allem Pocket-Computern. Es kommen aber auch andere Kennungen in Frage, beispielsweise eine zufällige oder pseudo-zufällige Zeichenfolge sowie eine von dem jeweiligen Teilnehmer eingegebene Zeichenfolge.

Bei dem erfindungsgemäßen Verfahren ist also eine Erweiterung des Befehls zum Zellenaufbau vorgesehen, denn die zum Zellenaufbau verwendete Kennung ist teilnehmerabhängig, während der Zellenname, unter dem die Netzwerkzelle betrieben wird, für alle Teilnehmer des Netzwerks einheitlich ist.

Nach dem Senden des Befehls zum Zellenaufbau im Schritt 33 kann im nachfolgenden Schritt 40 erkannt werden, ob gerade mehrere Teilnehmer versuchen, ein Netzwerk unter dem gleichen Zellennamen aufzubauen. Der Teil der teilnehmerabhängigen Kennung, der durch den Zellennamen gebildet ist, lässt erkennen, dass beim Aufbau der gleiche Zellenname verwendet werden soll. Der andere Teil der teilnehmerabhängigen Kennung, der teilnehmerspezifisch ist, lässt erkennen, dass es sich hier um unterschiedliche Teilnehmer handelt, die einen Zellenaufbau anstoßen.

In einer ersten Ausgestaltung des erfindungsgemäßen Verfahrens wird beim Anstoß des Aufbaus einer Netzwerkzelle ein zusätzlicher Parameter angegeben, nämlich ein getrennter teilnehmerabhängiger Parameter. Die teilnehmerabhängige Kennung wird dann durch den Zellennamen als ersten Parameter und den getrennten teilnehmerabhängigen Parameter gebildet. In einer anderen Ausgestaltung wird ein temporärer Zellenname gebildet, indem der Zellenname und ein teilnehmerspezifischer Parameter aneinandergehängt werden.

Die Figur 4 bezieht sich auf die Ausgestaltung, bei der der Zellenname und ein teilnehmerspezifischer Parameter aneinandergehängt werden. Die so gebildete teilnehmerabhängige Kennung kann unter Umständen sehr lang sein, nämlich wenn der teilnehmerspezifische Parameter sehr lang ist. Für das Anhängen weiterer Teilnehmer in Schritt 60 wäre es sehr aufwändig, eine derart lange Kennung einzugeben. Zudem muss diese Kennung den potenziellen Teilnehmern erst mitgeteilt werden. Es ist also wesentlich komfortabler, das Anhängen weiterer Teilnehmer an die Netzwerkzelle unter dem Zellennamen ohne den teilnehmerspezifischen Parameter durchzuführen. In einem Schritt 61 wird deshalb der temporäre Zellenname verkürzt, so dass der eigentliche Zellenname übrig bleibt. In Schritt 62 wird die Netzwerkzelle unter dem Zellennamen betrieben, sodass die Aufnahme weiterer Teilnehmer in Schritt 63 unter Verwendung des Zellennamens erfolgen kann.

### Bezugszeichenliste

- 1: Notebook-Computer
- 2: Pocket-Computer
- 3: Desktop-Computer
- 4: Kommunikationsverbindung
- 5: kabellose Schnittstelle

## Patentansprüche

1. Verfahren zum Aufbau eines Ad-hoc-Netzwerks (4) zwischen mehreren Teilnehmern (1, 2, 3) mit den Schritten:
- Bereitstellen einer Kabellosen Schnittstelle (5) für die Teilnehmer (1, 2, 3),
- Aufbau einer Netzwerkzelle durch einen den Aufbau anstoßenden Teilnehmer, welcher einen Sonderstatus besitzt und einen Zellennamen der Netzwerkzelle vergibt,
**dadurch gekennzeichnet, dass**
sichergestellt ist, dass in einer durch ihren Zellennamen spezifizierten Netzwerkzelle nicht mehr als ein Teilnehmer einen Sonderstatus erhält, indem
- beim Anstoß des Zellenaufbaus durch den Teilnehmer mit Sonderstatus aus dem Zellennamen und einem teilnehmerspezifischen Parameter eine teilnehmerabhängige Kennung gebildet wird,
- über eine Abfrage der Netzwerkzelle durch andere Teilnehmer anhand der teilnehmerabhängigen Kennung der Netzwerkzelle festgestellt wird, ob mehrere Teilnehmer einen Zellenaufbau mit gleichem Zellennamen angestoßen haben und
- in allen Teilnehmern, die den Zellenaufbau mit gleichem Zellennamen angestoßen haben, Gegenmaßnahmen ergriffen werden.

2. Verfahren nach Anspruch 1,
**dadurch gekennzeichnet, dass** als Gegenmaßnahme nur einer der ermittelten Teilnehmer, die den Zellenaufbau mit gleichem zellennamen angestoßen haben, den Sonderstatus behält und anschließend die teilnehmerabhängige Kennung des Teilnehmers mit Sonderstatus derart verkürzt wird, dass die Zelle unter dem Zellennamen betrieben wird.

3. Verfahren nach Anspruch 2,
**dadurch gekennzeichnet, dass** zur Festlegung des Teilnehmers, der den Sonderstatus behält, der Zeitpunkt des Anstoßes des Aufbaus verwendet wird.

4. Verfahren nach Anspruch 2 oder 3,
**dadurch gekennzeichnet, dass** zur Anmeldung weiterer Teilnehmer in der Netzwerkzelle der Zellenname verwendet wird.

5. Verfahren nach Anspruch 1,
**dadurch gekennzeichnet, dass** als Gegenmaßnahme der Zellenaufbau in allen Teilnehmern, die den Zellenaufbau mit gleichem Zellennamen angestoßen haben, abgebrochen wird.

6. Verfahren nach einem der Ansprüche 1 bis 5,
**dadurch gekennzeichnet, dass** als teilnehmerspezifischer Parameter eine zufällige Zeichenfolge verwendet wird.

7. Verfahren nach einem der Ansprüche 1 bis 6,
**dadurch gekennzeichnet, dass** als teilnehmerspezifischer Parameter eine durch einen Benutzer eingegebene Zeichenfolge verwendet wird.

8. Verfahren nach einem der Ansprüche 1 bis 5,
**dadurch gekennzeichnet, dass** die teilnehmerabhängige Kennung unter Verwendung eines gerätespezifischen Codes gebildet wird.

9. Verfahren nach Anspruch 8,
**dadurch gekennzeichnet, dass** der gerätespezifische Code eine MAC-Adresse, eine Prozessor-ID oder eine UUID ist.

10. Computerprogrammprodukt zum Aufbau eines Ad-hoc-Netzwerks (4), das Programminstruktionen zur Durchführung der Schritte des Verfahrens nach einem der Ansprüche 1 bis 9 enthält und das Verfahren durchführt, wenn es auf einem Computer (1, 2, 3) ausgeführt wird.

## Claims

1. Method for setting up an ad-hoc network (4) between a plurality of subscribers (1, 2, 3), having the following steps:
- a wireless interface (5) is provided for the subscribers (1, 2, 3),
- a network cell is set up by a subscriber who initiates the set-up, has a special status and allocates a cell name to the network cell,
**characterized in that**
it is ensured that no more than one subscriber receives a special status in a network cell specified by its cell name by virtue of the fact that
- a subscriber-dependent identifier is formed from the cell name and a subscriber-specific parameter when the cell set-up is initiated by the subscriber having the special status,
- it is determined using the subscriber-dependent identifier of the network cell whether a plurality of subscribers have initiated a cell set-up with the same cell name by virtue of other subscribers interrogating the network cell, and
- countermeasures are taken in all subscribers who have initiated the cell set-up with the same cell name.

2. The method according to Claim 1,
**characterized in that**, as a countermeasure, only one of the ascertained subscribers who have initiated the cell set-up with the same cell name retains the special status and the subscriber-dependent identifier of the subscriber having the special status is then shortened in such a manner that the cell is operated under the cell name.

3. The method according to Claim 2,
**characterized in that** the time at which the set-up is initiated is used to determine the subscriber who retains the special status.

4. The method according to Claim 2 or 3,
**characterized in that** the cell name is used to register further subscribers in the network cell.

5. The method according to Claim 1,
**characterized in that**, as a countermeasure, the cell set-up is aborted in all subscribers who have initiated the cell set-up with the same cell name.

6. The method according to one of Claims 1 to 5,
**characterized in that** a random character string is used as the subscriber-specific parameter.

7. The method according to one of Claims 1 to 6,
**characterized in that** a character string which has been input by a user is used as the subscriber-specific parameter.

8. The method according to one of Claims 1 to 5,
**characterized in that** the subscriber-dependent identifier is formed using a device-specific code.

9. The method according to Claim 8,
**characterized in that** the device-specific code is a MAC address, a processor ID or a UUID.

10. Computer program product for setting up an ad-hoc network (4), which computer program product contains program instructions for carrying out the steps of the method according to one of Claims 1 to 9 and carries out the method when it is executed on a computer (1, 2, 3).

## Revendications

1. Procédé pour établir un réseau ad hoc (4) entre plusieurs abonnés (1, 2, 3) comprenant les étapes suivantes :
- mise à disposition d'une interface sans fil (5) pour les abonnés (1, 2, 3),
- établissement d'une cellule de réseau par le biais de l'un des abonnés déclenchant l'établissement, lequel possède un statut particulier et attribue un nom de cellule de la cellule de réseau,
**caractérisé en ce**
**qu'**il est garantit que pas plus d'un abonné obtient un statut particulier dans une cellule de réseau spécifiée par son nom de cellule, du fait que
- lors du déclenchement de l'établissement de la cellule par l'abonné possédant le statut particulier, un identifiant dépendant de l'abonné est formé à partir du nom de cellule et d'un paramètre spécifique à l'abonné,
- une interrogation de la cellule de réseau par des autres abonnés permet de définir au moyen de l'identifiant dépendant de l'abonné de la cellule de réseau si plusieurs abonnés ont déclenché l'établissement d'une cellule avec le même nom de cellule et
- des actions correctives sont engagées chez tous les abonnés qui ont déclenché l'établissement de la cellule avec le même nom de cellule.

2. Procédé selon la revendication 1, **caractérisé en ce que** l'action corrective consiste **en ce qu'**un seul des abonnés déterminés qui ont déclenché l'établissement de la cellule avec le même nom de cellule conserve le statut particulier et l'identifiant dépendant de l'abonné possédant le statut particulier est ensuite raccourci de telle sorte que la cellule est exploitée sous le nom de cellule.

3. Procédé selon la revendication 2, **caractérisé en ce que** le moment du déclenchement de l'établissement est utilisé pour définir l'abonné qui conserve le statut particulier.

4. Procédé selon la revendication 2 ou 3, **caractérisé en ce que** le nom de cellule est utilisé pour déclarer des abonnés supplémentaires dans la cellule de réseau.

5. Procédé selon la revendication 1, **caractérisé en ce que** l'action corrective consiste à interrompre l'établissement de la cellule chez tous les abonnés qui ont déclenché l'établissement de la cellule avec le même nom de cellule.

6. Procédé selon l'une des revendications 1 à 5, **caractérisé en ce que** le paramètre spécifique à l'abonné utilisé est une séquence de caractères aléatoire.

7. Procédé selon l'une des revendications 1 à 6, **caractérisé en ce que** le paramètre spécifique à l'abonné utilisé est une séquence de caractères saisie par un utilisateur.

8. Procédé selon l'une des revendications 1 à 5, **caractérisé en ce que** l'identifiant dépendant de l'abonné est formé en utilisant un code spécifique à l'appareil.

9. Procédé selon la revendication 8, **caractérisé en ce que** le code spécifique à l'appareil est une adresse MAC, un ID de processeur ou un UUID.

10. Produit de programme informatique pour établir un réseau ad hoc (4), lequel contient des instructions de programme pour exécuter les étapes du procédé selon l'une des revendications 1 à 9 et met en oeuvre le procédé lorsqu'il est exécuté sur un ordinateur (1, 2, 3).
